# EUROPEAN PATENT APPLICATION

(11) **EP 4 431 239 A1**
(43) Date of publication of application: **18.09.2024**
(21) Application number: 22892430.4
(22) Date of filing: 22.09.2022
(51) Int. Cl.: B25B 27/02, B25B 7/00, B25B 7/12, F16L 23/036

(54) **CLAMPING JIG FOR PIPE CONNECTION**

(30) Priority: 10.11.2021 JP 2021183402
(71) Applicant: Yodogawa Hu-tech Co., Ltd., Suita-shi, Osaka 564-0063 (JP)
(72) Inventor: YAMAMOTO, Akihiro, Suita-shi, Osaka 564-0063 (JP); OBA, Naoyuki, Suita-shi, Osaka 564-0063 (JP); OHARA, Takeru, Suita-shi, Osaka 564-0063 (JP)
(74) Representative: Ter Meer Steinmeister & Partner
(86) International application number: PCT/JP2022/035420
(87) International publication number: WO 2023/084929

(57) **Abstract**

The present invention provides a clamping jig for pipe connection that can reduce metal contamination. The clamping jig 10 is to connect opposed pipes 70, 70 and includes a first clamping portion 21 fittable into a collar portion 73 of one pipe in the axial direction from the outside and a second clamping portion 31 fittable into the collar portion of the other pipe in the axial direction from the outside, wherein the clamping jig is configured to bring the first clamping portion and the second clamping portion close to each other. The clamping jig is an assembly of members 20, 30, 40, and 50 made of metal materials, and at least a portion of the members is coated with a resin.

## Description

### TECHNICAL FIELD

The present invention relates to a clamping jig for use in the connection of two pipes with joints together.

### BACKGROUND ART

Pipes made of fluorinated resin are used to supply and transfer a feed material fluid, a cleaning fluid, a fuel fluid or the like in various types of apparatuses, such as production apparatus, cleaning apparatus, and assembling apparatus, used in the field of electronics such as semiconductors, the pharmaceutical field, the biotechnology field, and other fields.

Pipes with joints disposed at their ends have been proposed for these pipes. The pipes with joints are connected by interposing an annular sealing member between flanges of the joints, and the flanges are clipped from the outer periphery to maintain the connection (see, Patent Document 1, for example).

Each joint has a collar portion on the rear side thereof. When connecting pipes together, a clamping jig is used to hold the collar portions and press them toward the sealing members, thus bringing the pipes into close contact with the sealing members.

Patent Document 1 discloses a clamping jig for clamping a collar portion from the outside in the axial direction at the end portion of a pair of upper and lower support members that are supported rotatably by a fulcrum point. The jig has a lever that supports the end portion of the lower support member and presses the upper support member from the upper side. This lever presses the upper support member by means of a pressing member, e.g., a pressing roller.

### PRIOR ART DOCUMENT

Patent Document 1: Japanese Patent Application Publication No. 2019-190495

### SUMMARY OF INVENTION

### PROBLEMS TO BE SOLVED BY THE INVENTION

In the fields of semiconductor manufacturing, cleaning, assembly and others, it is necessary to prevent feedstock fluids or their components from metal contamination.

The clamping jig is made of metallic material such as stainless steel because it must clamp the collar portion of the pipe with a strong force. However, the clamping jig of Patent Document 1 involves friction between the pressing member of the lever and the upper support member, when the pressure member of the lever presses the upper support member. As a result, fine metal powders may be generated, which is likely to cause metal contamination.

The object of the present invention is to provide a clamping jig for piping connection that can reduce metal contamination.

### MEANS TO OVERCOME THE PROBLEMS

The present invention provides
a clamping jig for connecting pipes placed in opposite directions, each pipe having a collar portion at its end portion,
the clamping jig including a first clamping portion that can be fitted into the collar portion of one pipe in the axial direction from the outside and a second clamping portion that can be fitted into the collar portion of the other pipe in the axial direction from the outside,
the clamping jig being configured to bring the first clamping portion and the second clamping portion close to each other,
the clamping jig being an assembly of metal members, and
wherein at least a portion of the metal members is coated with a resin.

The above-mentioned resin used for the coating may be one of the resins selected from the group consisting of polyphenylene sulfide, polytetrafluoroethylene and polypropylene.

The assembly of metal members comprises:
a first member having a distal end formed with the first clamping portion and a proximal end formed with a pivot portion;
a second member having a distal end formed with the second clamping portion and a proximal end pivoted to the pivot portion of the first member,
a support member extending from the first member through the second member and having a tip portion formed with a support portion;
a lever member having a distal end pivoted to the support portion of the support member and a proximal end formed with a lever gripping portion; and
a link member disposed on the pivot portion side than the support member and for connecting the second member and the lever member.

The assembly of metal members may further comprises a biasing member for exerting a force on the first and second members in a direction of being away from each other.

The biasing member is preferably made of non-metallic materials.

### EFFECT OF THE INVENTION

With the clamping jigs for pipe connection according to the present invention, the members made of metal materials are coated with resin, preventing the user's (installer's) gloves and other items from metal contamination.

### BRIEF DESCRIPTION OF THE DRAWINGS

Fig. 1 is one embodiment of the present invention and shows a left side view of a clamping jig for pipe connection in the open state.
Fig. 2 is a perspective view of the clamping jig in the open state.
Fig. 3 is a perspective view of the clamping jig in the open state, seen from an oblique downward side.
Fig. 4 is a perspective view of the clamping jig with the lever member removed.
Fig. 5 is a perspective view of the clamping jig with the second member removed.
Fig. 6 is a cross-sectional view taken along line A-A in Fig. 2.
Fig. 7 shows the clamping jig in the open state wherein (a) is a front view and (b) is a rear view.
Fig. 8 is a cross-sectional view of the clamping jig in the closed state.

### EMBODIMENT FOR CARRYING OUT THE INVENTION

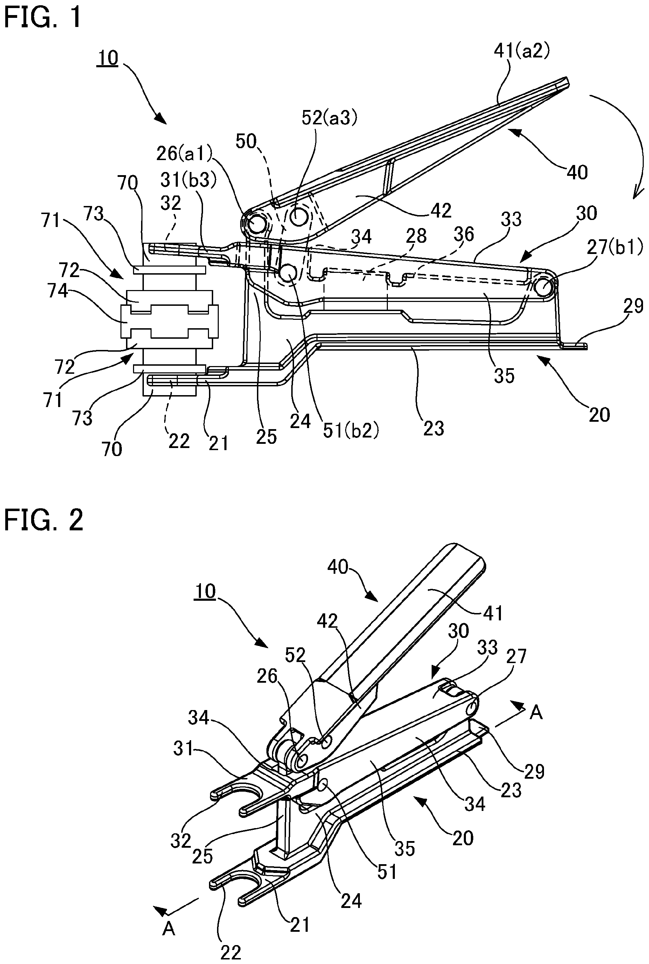

In the following, a clamping jig 10 for connecting pipes according to one embodiment of the present invention will be described with reference to the drawings. For the sake of explanation, the right side of the paper in Fig. 1 will be referred to as "proximal end" or "front," the left side as "distal end" or "rear," and the upper side of the paper as "top" and the lower side as "bottom."

The clamping jig 10 for connecting pipes according to the present invention is a tool used for connecting pipes 70, 70 having joints, as shown in Fig. 1. Each pipe 70 has a joint 71 comprising a flange 72 at its end portion and a collar portion 73 at a position slightly behind the flange 72. The connection of pipes 70 and 70 are conducted as follows: Pipes 70 and 70 are placed opposite each other with an annular sealing member 74 placed between flanges 72 and 72. The clamping jig 10 is used to apply a force on the collar portions 73 and 73 to bring the collar portions closer together, clamp and press them, such that the sealing member 74 and the flanges 72 and 72 are brought into close contact and then tightly connected. If desired, the connected portion may be mounted with a circular, ring-shaped clip (not shown). The pipe 70 is not limited to a straight pipe, but may also be a branched pipe. In addition, the pipe 70 may have valves, flow meters, or may be the one extending from various fluid equipment.

When pipes 70, joints 71, and sealing member 74 are applied for various equipment of manufacturing, cleaning, and assembling in the fields of semiconductors or other electronics, pharmaceuticals, and biotechnology, materials to be used for them are, for example, a fluorine resin having excellent properties in thermal melting and corrosion resistance. The fluorine resin suitable for these applications includes tetrafluoroethylene-perfluoroalkyl vinyl ether copolymer (PFA). Other examples include tetrafluoroethylene-hexafluoropropylene copolymer (FEP) and tetrafluoroethylene-hexafluoropropylene-vinylidene fluoride ternary copolymer. It is noted that the materials and properties of the pipes 70, joints 71, and sealing member 74 are not limited to the foregoing materials.

The clamping jig 10 according to the embodiment of the present invention is characterized in that the main components are coated with resin. As shown in Figs. 1 and 2, the main components of the clamping jig 10 may comprise a first member 20, a second member 30, a lever member 40, and a link member 50 (Fig. 1). The first member 20 and second member 30 are interconnected via a pivot axis 27. The first member 20 and lever member 40 are interconnected via a support shaft 26. The second member 30 and link member 50 are interconnected via a link shaft 51. The lever member 40 and link member 50 are interconnected via a link shaft 52. In this embodiment, the clamping jig 10 may include a biasing member 28 for restoration. It is noted that the clamping jig 10 is, of course, not limited to this embodiment, but various configurations can be adopted.

The first member 20, the second member 30, the lever member 40, and the link member 50 are required to have a certain strength and rigidity, and are made of a metallic material such as stainless steel to prevent rust from appearing even after long-term use. The shaft members such as the pivot axis 27, the support shaft 26, and the link shafts 51, 52 can also be made of metallic materials. The biasing member 28 is made of a non-metallic material, which will be described later.

Of the above-mentioned members, at least the members including the first member 20, the second member 30, the lever member 40, and the link member 50 may be coated with resin. The resin coating is preferably applied to the entire surface of each member. The resin coating prevents the exposure of the metal surface. When working of connecting and installing pipes 70, 70, the user can reasonably avoid metal contamination on gloves or other items. In addition, the resin coating prevents metal contamination due to the generation and scattering of metal powders when these members slide into contact.

Resins used for resin coating include polyphenylene sulfide (PPS), polytetrafluoroethylene (PTFE), and polypropylene (PP). Other resins can also be used.

A resin coating formed on the surface of the members preferably has a thickness of 20 µm to 100 µm, more preferably 30µm to 70µm. The resin coating can be formed, for example, by dipping the member in the resin, spraying the resin or applying the resin to the member.

The resin coating is preferably applied to at least a part of each of the members, particularly at locations where the user can touch or where members slide against each other. Applying the resin coating at locations where the user is likely to touch prevents metal contamination on gloves and other items. In addition, applying the resin coating at locations where each of the members slides against each other prevents metal contamination from metal powders generated by the sliding contact between members.

In the present embodiment, the first member 20, the second member 30, the lever member 40, and the link member 50 are all provided over their entire surfaces with polypropylene coatings in thickness of 50 µm. Each of the members is described in detail below.

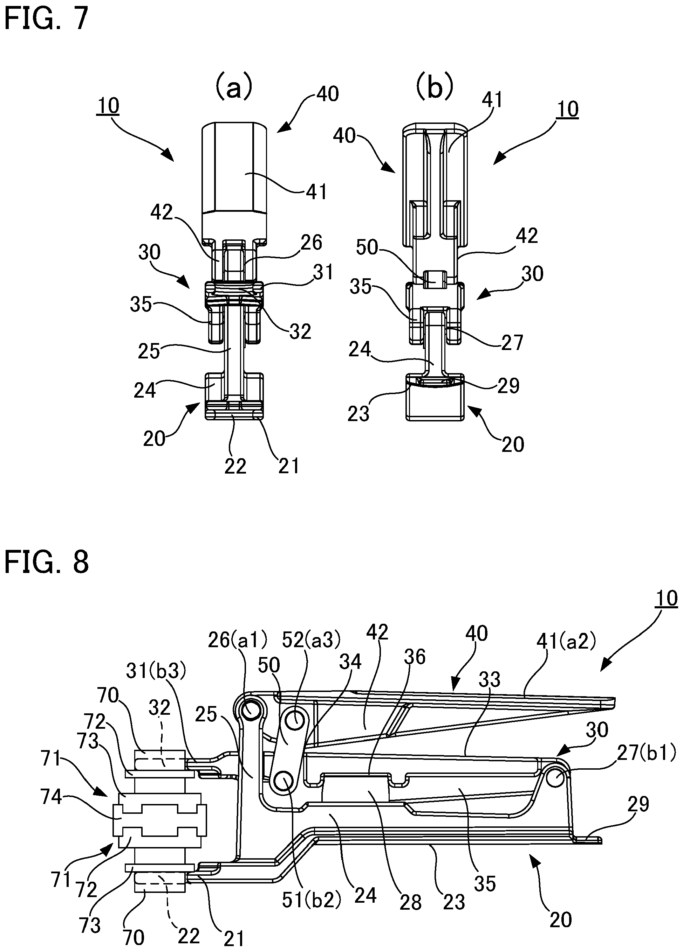

Figs. 1 to 7 show the clamping jig 10 in the open state with the clamping portions 21, 31 spaced apart from each other at their distal ends of the jig 10. Fig. 8 shows the clamping portions 21, 31 in the closed state with the clamping portions 21, 31 closer to each other.

The first member 20 is provided at its distal end with a first clamping portion 21 that is configured to fit into the pipe 70 (Fig. 1) and compress the collar portion 73, and at its proximal end with a first gripping portion 23 to be gripped by the user. The first clamping portion 21 is formed on the distal end side with a substantial U-shaped first clamping groove 22 which can be fitted into the pipe 70, as shown in Fig. 2 and other figures. In the illustrated embodiment, the first clamping portion 21 and the first gripping portion 23 are connected by a first plate 24 extending in the vertical direction. The first clamping portion 21 is attached to the distal end of the first plate 24. The first plate 24 includes a step portion which causes the proximal end side to be higher than the distal end side. The first gripping portion 23 is connected to the first clamping portion 21 via the step portion. The height difference between the first clamping portion 21 and the first gripping portion 23 is preferably a distance where the user can insert fingers.

The first plate 24 has a pivot axis 27 mounted on the proximal end side, which serves as a pivot point for the second member 30. On the end side of the first plate 24, there is a support rod 25 which projects upwardly and serves as a support member. The support rod 25 is mounted on its end portion with a support shaft 26 passing through the second member 30 and serves as a support. The support rod 25 is provided on the distal end side of the first member 20, preferably on the distal end side than the center of the first member 20, more preferably on the position from the distal end side to about 1/3 of the first member 20.

On the top surface of the first plate 24, a biasing member 28 is provided at the position of the proximal end side of the plate 24 than the support rod 25. The biasing member 28 applies a force on the second member 30 such that an upward reaction force is exerted on the second member 30 when the second member 30 is depressed, which will be described later. The biasing member 28 is preferably made of a non-metallic material, for example, rubber. The biasing member 28 may also be a spring made of resin.

In addition, the first member 20 may be provided at its proximal end with a claw piece 29 for removing clips and other parts of the connected pipes 70, 70.

The second member 30 comprises a second plate 33 having a second clamping portion 31 formed at its distal end, side plates 35 extending downward from both sides of the second plate 33, and an inner plate 36 formed on the back surface of the second plate 33.

Like the first clamping portion 21, the second clamping portion 31 is formed at its distal end side with a U-shaped second clamping groove 32 configured to fit into the pipe 70.

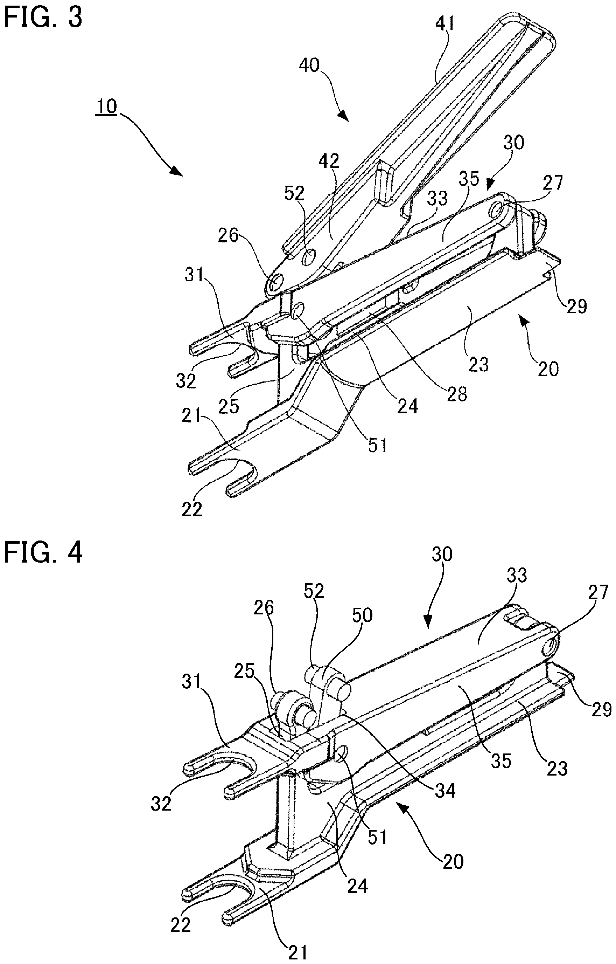

As shown in Fig. 4, the second plate 33 has an insertion hole 34 through which the support rod 25 of the first plate 24 and a link member 50 to be described later can be loosely inserted. The insertion hole 34 is a long through-hole extending in a longitudinal direction, and allows the support rod 25 to be inserted on the front side and the link member 50 to be inserted on the rear side.

The side plate 35 provides for attachment of the pivot axis 27 and the second link shaft 51, as well as a guard function to prevent foreign objects from being caught between the first member 20 and the second member 30.

The proximal end of the side plate 35 is pivoted to a pivot shaft 27 attached to the first member 20, thereby allowing the second member 30 to swing relative to the first member 20. The side plate 35 has a second link shaft 51 attached to the proximal end side downward in the insertion hole 34, as shown in Fig. 4. The lower end of the link member 50 is pivoted to the second link shaft 51. The second link shaft 51 is positioned behind the support rod 25 and at the place where the second link shaft 51 and the link member 50 do not interfere with the support rod 25, when the second member 30 is attached to the first member 20.

As shown in Fig. 8, when the upper surface of the biasing member 28 contacts the inner plate 36, the second member 30 is urged upwardly by the inner plate 36.

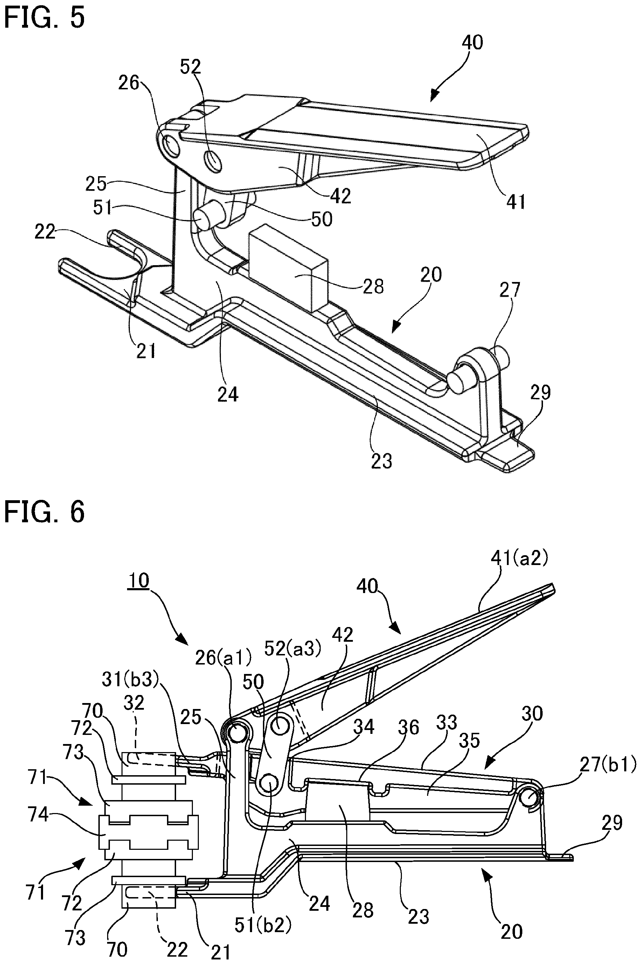

The second member 30 can be oscillated by the swinging movement of the lever member 40, which will be explained later, from a state where the second clamping portion 31 is tilted about 3 to 10 degrees, as shown in Figs. 1 and 6, to a state where the second clamping portion 31 is approximately horizontal, as shown in Fig. 8.

The lever member 40 is provided at its proximal end with a lever gripping portion 41 for gripping by the user. The lever member 40 is also provided at its distal end side with a pair of subplates 42 that stand vertically. The subplate 42 is pivoted on the support shaft 26 of the support rod 25 described above, as shown in Fig. 6, thereby allowing the lever member 40 to swing on the upper side of the first member 20.

A lever-side link shaft 52 is attached to the lever member 40. The lever-side link shaft 52 is disposed behind than the support shaft 26. The upper end of the link member 50 is pivoted to the lever-side link shaft 52.

In the particular embodiment, the lever member 40 can be swinged from the state where the proximal side is tilted upward by about 20 to 30 degrees to the first member 20, as shown in Figs. 1 and 6, to a state where it is approximately parallel to the first member 20, as shown in Fig. 8.

The lever member 40 is formed in such a shape that the subplate 42 does not directly contact or slide against the second member 30 in the open and closed states and during swinging, as shown in Figs. 1, 6, and 8. This prevents metal contamination, such as generation of metal powder, caused by friction between the lever member 40 and the second member 30.

The link member 50 connects the second member 30 and the lever member 40, as shown in Figs. 6 and 8. Specifically, the link member 50 is pivotally connected at its lower end to the second link shaft 51 of the second member 30 and at its upper end to the lever-side link shaft 52 of the lever member 40.

The link member 50 and the link shafts 51, 52 are formed at a position and to a length that allows the link member 50 to swing to push the second member 30 downward relative to the lever member 40 that swings about the support shaft 26, when the lever member 40 is pushed down from the open state shown in Fig. 6 to the closed state shown in Fig. 8. In the present embodiment, the second member is inclined at 3 to 10 degrees in the open state. When the lever member 40 is pushed from 20 to 30 degrees tilted position to a substantially horizontal position, the second member 30 can also be swinged to the substantially horizontal position.

In the initial open state of the jig 10, the biasing member 28 forces the second member 30 upwardly, leaving a space between the clamping portions 21 and 31, as shown in Fig. 6. From this state, when the user grips the first gripping portion 23 and the lever gripping portion 41, the proximal end of the lever member 40 moves downward around the support shaft 26 at the distal end (arrow in Fig. 1). Then, the link member 50 moves downward through the lever member 40. Due to the downward movement of the link member 50, the second clamping portion 31 at the distal end of the second member 30 swings downward around the support shaft 26 while the inner plate 36 compresses the biasing member 28. As a result, the clamping portions 21 and 31 approach each other, and the clamping jig 10 reaches the closed state shown in Fig. 8.

On the other hand, when the user releases the grip from the closed state and releases the gripping force, the second member 30 is pushed upwardly by the restoring force of the biasing member 28, whereby the clamping jig 10 returns to the open state shown in Figs 1, 6, and other figures.

The clamping jig 10 of the present invention has a resin coating on the first member 20, the second member 30, the lever member 40, and the link member 50. Therefore, gloves and other items can be adequately protected from metal contamination when the user operates to connect and install the pipes 70, 70.

In addition, the second member 30 and the lever member 40 do not directly contact or slide against each other during the movement from the open state to the closed state or from the closed state to the open state. Thus, metal contamination due to the generation of metal dust caused by the friction of these members can also be prevented.

The clamping jig 10 can generate a large gripping force between the clamping portions 21 and 31 with a small gripping force. In particular, when the clamping jig 10 is shifted from the open state to the closed state, as shown in Figs. 6 and 8, the lever member 40 provides a lever wherein the support shaft 26 is the fulcrum point a1, the lever gripping portion 41 held by the user is the effort point a2, and the lever-side link shaft 52 is the load point a3. Since the distance between the fulcrum point a1 and the effort point a2 is longer than the distance between the fulcrum point a1 and the load point a3, the load point a3 can be pushed downward with a small gripping force.

The second member 30 provides a lever wherein the pivot axis 27 is the fulcrum point b1, the second link shaft 51 is the effort point b2, and the second clamping portion 31 is the load point b3. Since the distance between the fulcrum point b1 and the effort point b2 is longer than the distance between the fulcrum point b1 and the load point b3, the force acting on the effort point b2, i.e., the force applied by the link member 50 from the load point a3 of the lever member 40, can be amplified to act on the load point b3.

Due to the combination of two levers of the lever member 40 and the second member 30, the second gripping portion 31 can be displaced downward with a small gripping force and a strong gripping force can be applied between the gripping portions 21 and 31 with a strong clamping force.

The connection of pipes 70, 70 using the above-mentioned clamping jig 10 is described below. Between the clamping portions 21 and 31 in the open state of the clamping jig 10, as shown in Figs. 1 and 6, a sealing member 74 is mounted on the flange 72 of one of the pipes 70, 70 and is pressed against the flange 72 of the other pipe 70 in advance. Figs. 1 and 6 show that the pipe 70 on the upper side is not completely in contact with the sealing member 74.

The clamping jig 10 in the open state is moved closer to the pipes 70, 70 in this state to fit the first clamping groove 22 and the second clamping groove 32 into the pipes 70, 70 from the outside in the axial direction of the collar portions 73, 73.

When the user grasps the first gripping portion 23 and the lever member 40, the lever member 40 acts as a lever and the pressing force applied to the effort point a2 causes the lever member to swing around the support shaft 26, the proximal end of which approaches the first member 20, whereby the lever-side link shaft 52, which serves as the load point a3, is moved downward, and the link member 50 is pushed downward.

With the downward movement of the link member 50, the second member 30 functions as a lever with the pivot axis 27 as the fulcrum point b 1 and the second link shaft 51 as the effort point b2. And the second clamping portion 31 at the distal end of the second member 30 swings downward around the pivot axis 27. Then, the second clamping portion 31 comes close to the first clamping portion 21 while acting as the load point b3 to the collar portion 73 sandwiched between the clamping portions 21 and 31. As a result, as shown in Fig. 8, the first clamping portion 21 and the second clamping portion 31 provide a clamping force in the direction of pulling the collar portions 73, 73 of the pipes 70, 70, whereby the collar portions 73, 73 are pressed. Then, the flanges 72, 72 receive the pressing force, and are brought into intimate contact with the sealing member 74, thus connecting the pipes 70, 70 to each other.

With the clamping jig 10 according to the present invention, the clamping portions 21 and 31 are capable of pressing the collar portions 73 and 73 while the clamping portions 21 and 31 are kept substantially parallel to each other. Accordingly, the flange 72 can be firmly attached to the sealing member 74 without being inclined, and thus the sealability can be improved. The state where the flanges 72, 72 are firmly attached to the sealing member 74 can preferably be maintained by attaching a clip to sandwich the flanges 72, 72 while the flanges 72, 72 are firmly attached to the sealing member 74.

After the pipes 70, 70 have been connected, the user releases the grip and the grip force is removed. Due to the restoring force of the biasing member 28, the second member 30, the link member 50 and the lever member 40 return to the open state as shown in Figs. 1 and 6. The clamping jig 10 can then be removed from the pipes 70, 70.

The clamping jig 10 of the present invention configured as described above can bring the collar portions 73, 73 closer to each other with a large clamping force, and the pipes 70, 70 can be connected in a leakproof manner.

The foregoing description is given solely for the purpose of describing the present invention. Accordingly, it should not be construed as limiting the invention set forth in the appended claims or as narrowing the scope of the present invention. Also, the constituent elements of the present invention are not limited to those described in the above example, and it is of course possible to make various modifications within the technical scope defined in the appended claims.

For example, the constitution, shape, angle and the like of each member shown in the figures are merely one example. Thus, the configuration of the pipe 70 is not limited to that shown in the example as long as the pipe comprises a collar portion 73 or a similar portion.

### EXPLANATION OF REFERENCE NUMERALS

10 Clamping jig for pipe connection
20 First member
21 First clamping portion
26 support shaft (support portion)
27 Pivot axis (Pivot portion)
30 Second member
31 Second clamping portion
40 Lever member
50 Link member
51 Second link shaft
52 Lever-side link shaft
70 Pipe with joint
71 Joint
73 Collar portion

## Claims

1. A clamping jig for connecting pipes placed in opposite directions, each pipe having a collar portion at its end portion,
the clamping jig including a first clamping portion that can be fitted into the collar portion of one pipe in the axial direction from the outside and a second clamping portion that can be fitted into the collar portion of the other pipe in the axial direction from the outside,
the clamping jig being configured to bring the first clamping portion and the second clamping portion close to each other,
the clamping jig being an assembly of metal members, and
wherein at least a portion of the metal members is coated with a resin.

2. The clamping jig as defined in claim 1, wherein the resin is selected from the group consisting of polyphenylene sulfide, polytetrafluoroethylene and polypropylene.

3. The clamping jig as defined in claim 1 or 2, wherein the assembly of metal members comprises:
a first member having a distal end formed with the first clamping portion and a proximal end formed with a pivot portion;
a second member having a distal end formed with the second clamping portion and a proximal end pivoted to the pivot portion of the first member,
a support member extending from the first member through the second member and having a tip portion formed with a support portion;
a lever member having a distal end pivoted to the support portion of the support member and a proximal end formed with a lever gripping portion; and
a link member disposed on the pivot portion side than the support member and for connecting the second member and the lever member.

4. The clamping jig as defined in claim 3, wherein the assembly of metal members further comprises a biasing member for exerting a force on the first and second members in a direction of being away from each other.

5. The clamping jig as defined in claim 4, wherein the biasing member is made of non-metallic materials.
